# EUROPEAN PATENT APPLICATION

(11) **EP 2 169 513 A1**
(43) Date of publication of application: **31.03.2010**
(21) Application number: 08165466.7
(22) Date of filing: 30.09.2008
(51) Int. Cl.: G06F 1/18, H01Q 1/22

(54) **Wireless network card**

(71) Applicant: Pro-Nets Technology Corp., Zhong-He City, Taipei County (TW)
(72) Inventor: Chen, Jen-Hung, Ban-Qiao City, Taipei County (TW); Chen, Hsuan-Chih, Yong-He City, Taipei County (TW)
(74) Representative: Viering, Jentschura & Partner

(57) **Abstract**

A wireless network card comprises a substrate (20); a wireless network module (22) installed on a surface of the substrate; an electric connection interface (21) formed on one side of the substrate; a fixing plate (23) arranged on another side of the substrate and vertical to the electric connection interface, wherein the substrate is fastened to one side of the fixing plate with at least two fixing elements (24); a protrudent portion (201) arranged on another side of the fixing plate and externally exposed; and an antenna element (25) formed on a surface of the protrudent portion. The antenna element is directly printed on or embedded in the protrudent portion in fabricating the substrate, whereby the fabrication cost is reduced. As the antenna element is only formed inside the protrudent portion of the substrate, it occupies much less space and is less likely to be damaged by impact or compression.

## Description

### BACKGROUND OF THE INVENTION

### Field of the Invention

The present invention relates to a wireless network card, particularly to a wireless network card installed inside a desktop computer.

### Description of the Related Art

802.11 is an industrial standard for wireless LAN, which is established by IEEE (Institute of Electrical and Electronics Engineers) to function as a wireless network protocol. A wireless network does not use physical wiring but adopts RF (Radio Frequency) electromagnetic waves as the transmission medium. Therefore, a wireless network is an RF-based communication network.

IEEE 802.11 assigns two operational modes: the infrastructure mode and the ad hoc mode. In the infrastructure mode, a wireless network card links a computer to an existing wire-based network via an access point. In the infrastructure mode, a laptop computer or a desktop computer can be wirelessly linked to an existing Ethernet in a house or office.

In the ad hoc mode, users' computers will not link to an existing network but directly and wirelessly link to each other without an access point. In the ad hoc mode, at most 9 computers can be organized into a wireless local area network to mutually share data directly. A wireless network can expand the coverage of an existing network without physical wiring and can provide a mobile working environment for computer users in a low cost and at a fast construction speed.

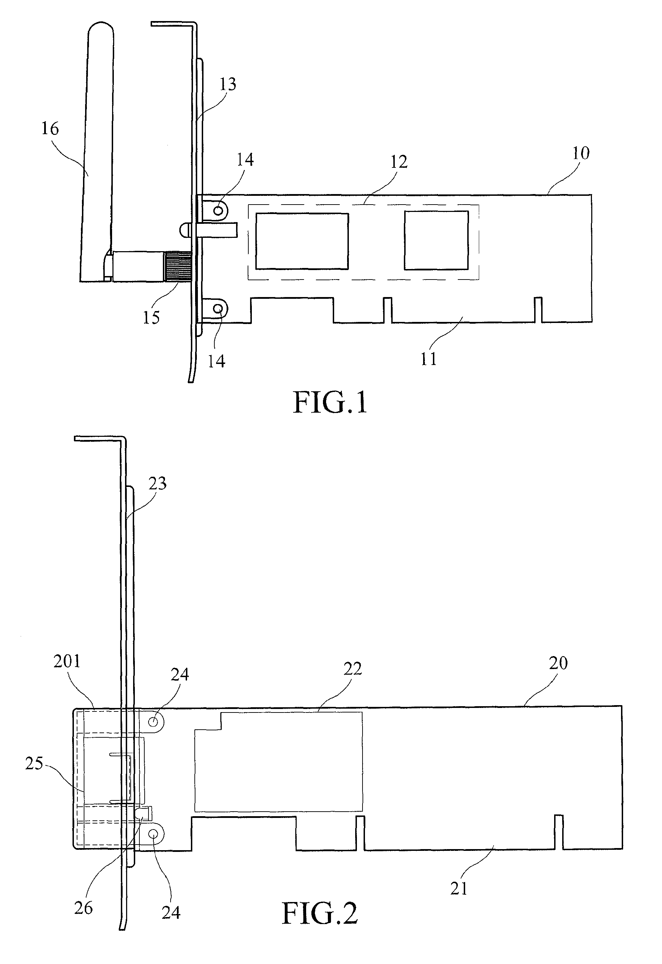

Refer to Fig. 1 for a conventional PCI-interface wireless network card for a desktop computer. The conventional PCI-interface wireless network card for a desktop computer has a substrate 10. One side of the substrate 10 has an electric connection interface 11 (a PCI interface in the drawing), whereby the substrate 10 is electrically coupled to the motherboard of the computer. One surface of the substrate 10 has a wireless network module 12. A fixing plate 13 is arranged on another side of the substrate 10 and vertical to the electric connection interface 11. The substrate 10 is fastened to one side of the fixing plate 13 with at least two fixing elements 14, whereby the substrate 10 is secured to the casing of the computer. An antenna connector 15 is installed on another side of the fixing plate 13 and exposed to the exterior of the computer. An external antenna 16 is electrically coupled to the wireless network module 12 via the antenna connector 15.

However, the external antenna 16 and the antenna connector 15 not only consume considerable material but also occupy significant space in the rear of the computer. Further, the external antenna 16 has a slender structure and is likely to be damaged by impact or compression.

### SUMMARY OF THE INVENTION

The primary objective of the present invention is to provide a wireless network card, which is exempted from an external antenna and an antenna connector, wherein the antenna element is directly printed on or embedded in the substrate, whereby the fabrication cost is reduced.

Another objective of the present invention is to provide a wireless network card, wherein the antenna element is formed on the protrudent portion of the substrate, whereby the antenna element occupies much less space and is less likely to be damaged by impact or compression.

To achieve the abovementioned objectives, the present invention proposes a wireless network card, which comprises a substrate; a wireless network module installed on a surface of the substrate; an electric connection interface formed on one side of the substrate, wherein the electric connection interface is a PCI interface or a PCI express interface; a fixing plate arranged on another side of the substrate and vertical to the electric connection interface, wherein the substrate is fastened to one side of the fixing plate with at least two fixing elements; a protrudent portion arranged on another side of the fixing plate and externally exposed; and an antenna element formed on a surface of the protrudent portion, wherein the antenna element is electrically coupled to the wireless network module.

In the present invention, an indication light is installed on the protrudent portion and used to indicate the operation states of the wireless network card; the antenna element is a printed antenna, a chip antenna, PIFA (Planar Inverted-F Antenna), or an antenna printed on a flexible circuit board.

In fabricating the substrate of the present invention, the protrudent portion is fabricated in the substrate at the same time, and the antenna element is formed on the protrudent portion with an easy and simple method. For example, the antenna element is directly printed on or embedded in the protrudent portion in fabricating the substrate. Thereby, the fabrication cost is reduced. Further, as the antenna element of the present invention is only formed inside the protrudent portion of the substrate, it occupies much less space and is less likely to be damaged by impact or compression.

### BRIEF DESCRIPTION OF THE DRAWINGS

- Fig.1: is a diagram schematically showing a conventional wireless network card;
- Fig.2: is a diagram schematically showing a PCI-interface wireless network card according to the present invention; and
- Fig.3: is a diagram schematically showing a PCI express-interface wireless network card according to the present invention.

### DETAILED DESCRIPTION OF THE INVENTION

Below, the technical contents of the present invention will be described in detail with the embodiments. How, it should be understood that the embodiments are only to exemplify the present invention but not to limit the scope of the present invention.

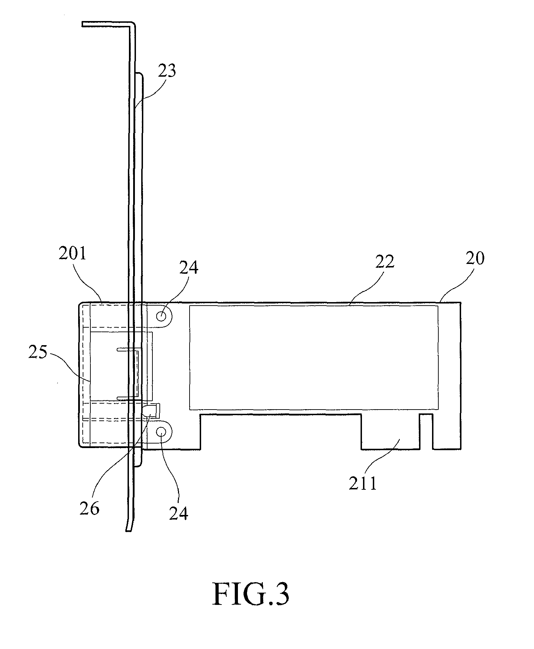

Refer to Fig.2 and Fig.3 diagrams respectively schematically showing a PCI-interface wireless network card and a PCI express-interface wireless network card according to the present invention. The wireless network card of the present invention comprises a substrate 20, a wireless network module 22 installed on a surface of the substrate 20, and an electric connection interface formed on one side of the substrate 20. The electric connection interface is a PCI interface 21 in Fig.2 or a PCI express interface 211 in Fig.3. The substrate 20 is electrically coupled to the mother board of the computer via the electric connection interface 21 or 211.

PCI is the abbreviation of "Peripheral Component Interconnect"-a local bus published by Intel. (Another local bus is published by VESA.) The main feature of PCI is that it is motherboard-independent and applies to different platforms. The PCI bus mainly applies to Pentium-series microprocessors, but it also applies to Power PC. Besides, a host can support at most 16 PCI-interface peripheral devices.

The PCI interface and the PCI express interface are the common interfaces of network cards and respectively adapted to different motherboard sockets. The data bus of the PCI interface has a width of 32 bits or 64 bits and has a working frequency of 33MHz. For the 32-bit wide data bus, 8 bits are transmitted per clock. Therefore, the highest data transmission rate is 33MHz*8 bits=264MB/sec. There was also a 66MHz edition published later. The 32-bit PCI interface has 64 pins, and the 64-bit PCI interface has 188 pins. PCI express (abbreviated into PCIe) is a new-generation PCI technology having the newest I/O interface and providing a greater bandwidth. PCIe has a capacity of 2.5Gbps each channel. PCIe has the advantages of stability, adaptability and advanced power management. PCIe is compatible with the software of the original PCI bus and supports the hot-swapping and hot-plugging function. PCIe applies to desktop computers, workstation servers, etc.

A fixing plate 23 is arranged on another side of the substrate 20 and vertical to the electric connection interface 21 or 211. The substrate 20 is fastened to one side of the fixing plate 23 with at least two fixing elements 24. When the substrate 20 is electrically coupled to the motherboard via inserting the electric connection interface 21 or 211 into the socket of the motherboard, the fixing plate 23 is fastened to the casing of the computer to enhance the firmness of the wireless network card.

The substrate 20 has a protrudent portion 201 arranged on another side of the fixing plate 23 and exposed to the exterior of the casing of the computer. An antenna element 25 is formed on one surface of the protrudent portion 201. The antenna element 25 may be a printed antenna, a chip antenna, PIFA (Planar Inverted-F Antenna), or an antenna printed on a flexible circuit board. The antenna element 25 is electrically coupled to the wireless network module 22.

An indication light 26 is installed on the protrudent portion 201 and electrically coupled to the wireless network module 22. The indication light 26 is used to indicate the operation states of the wireless network card, such as the state of power supply or the state of RF transmission.

The embodiments described above are only to exemplify the present invention but not to limit the scope of the present invention. Therefore, any equivalent modification or variation according to the spirit of the present invention is to be also included within the scope of the present invention.

## Claims

1. A wireless network card
comprising
a substrate,
a wireless network module installed on a surface of said substrate,
an electric connection interface formed on one side of said substrate, and
a fixing plate arranged on another side of said substrate and vertical to said electric connection interface, wherein said substrate is fastened to one side of said fixing plate with at least two fixing elements;
**characterized in**
**that** said substrate has a protrudent portion arranged on another side of said fixing plate and externally exposed, and
**that** an antenna element is formed on a surface of said protrudent portion, and
**that** said antenna element is electrically coupled to said wireless network module.

2. The wireless network card according to claim 1, wherein an indication light is installed on said protrudent portion.

3. The wireless network card according to claim 1, wherein said antenna element is a printed antenna, a chip antenna, PIFA (Planar Inverted-F Antenna), or an antenna printed on a flexible circuit board.

4. The wireless network card according to claim 1, wherein said electric connection interface is a PCI (Peripheral Component Interconnect) interface or a PCI express interface.
